# EUROPÄISCHE PATENTSCHRIFT

(11) **EP 2 601 081 B1**
(45) Veröffentlichungstag und Bekanntmachung des Hinweises auf die Patenterteilung: **19.09.2018**
(21) Anmeldenummer: 11782537.2
(22) Anmeldetag: 25.05.2011
(51) Int. Cl.: B60R 22/46

(54) **GURTAUFROLLER MIT STRAFFERANTRIEB**
SEAT BELT ROTARY DRIVE WITH RECOIL MOTOR
ENROULEUR DE CEINTURE AVEC ENTRAINEMENT POUR TENDEUR DE RAPPEL

(30) Priorität: 03.08.2010 DE 102010033184
(43) Veröffentlichungstag der Anmeldung: 12.06.2013
(73) Patentinhaber: Takata AG, 63743 Aschaffenburg (DE)
(72) Erfinder: PECHHOLD, Christoph, 89155 Erbach (DE); KLINGAUF, Gerhard, 88481 Balzheim (DE); FLEISCHMANN, Robert, 89233 Neu-Ulm / Pfuhl (DE); FELBER, Carsten, 89343 Jettingen-Schepach (DE); EINSIEDEL, Heinrich, 89077 Ulm (DE); FRIEDSMANN, Udo, 89160 Dornstadt (DE)
(74) Vertreter: Fischer, Uwe
(86) Internationale Anmeldenummer: PCT/DE2011/050015
(87) Internationale Veröffentlichungsnummer: WO 2012/016567

(56) Entgegenhaltungen:
- EP-A2- 1 283 137
- WO-A1-00/37337
- DE-A1- 2 931 164
- US-A- 5 690 295
- US-A- 5 881 962
- US-A1- 2004 245 361

## Beschreibung

Die Erfindung bezieht sich auf einen Gurtaufroller für einen Sicherheitsgurt mit einer Gurtspindel zum Auf- und Abwickeln des Sicherheitsgurts und mit einem Strafferantrieb gemäß dem Oberbegriff des Anspruchs 1.
Ein derartiger Gurtaufroller mit Strafferantrieb ist aus der europäischen Patentanmeldung EP 1 283 137 bekannt. Der Strafferantrieb umfasst einen Gasgenerator, ein Antriebsrad und eine Verbindungseinrichtung, die den Gasgenerator und das Antriebsrad verbindet. Die Verbindungseinrichtung weist ein Zuführungsrohr und eine Vielzahl von in dem Zuführungsrohr befindlichen Schubkörpern bzw. Schubgliedern auf, die nach einem Auslösen des Gasgenerators beschleunigt werden und das Antriebsrad zum Aufwickeln des Sicherheitsgurtes antreiben. Die Schubkörper bestehen bei dem vorbekannten Gurtaufroller aus Metall.
Ein weiterer Gurtaufroller mit Strafferantrieb und Schubkörpern nach dem Oberbegriff des Anspruchs 1 ist aus der deutschen Offenlegungsschrift DE 29 31 164 A1 bekannt. Die Schubkörper dieses Strafferantriebs bestehen aus Kunststoff.
Die US-Patentschriften US 5,881,962 und US 5,690,295 offenbaren jeweils Schubkörper aus einem Hartplastikmaterial. Die europäische Offenlegungsschrift EP 1 283 137 offenbart einen Gurtaufroller mit Schubkörpern aus Metall, insbesondere aus Eisen oder Aluminium.

Ausgehend von dem beschriebenen Stand der Technik liegt der Erfindung die Aufgabe zugrunde, einen Gurtaufroller anzugeben, der ein noch besseres Betriebsverhalten zeigt.

Diese Aufgabe wird ausgehend von einem Gurtaufroller der eingangs beschriebenen Art erfindungsgemäß durch die kennzeichnenden Merkmale des Anspruchs 1 gelöst. Vorteilhafte Ausgestaltungen des erfindungsgemäßen Gurtaufrollers sind in Unteransprüchen angegeben.

Ein wesentlicher Vorteil des erfindungsgemäßen Gurtaufrollers ist darin zu sehen, dass die Schubkörper aufgrund der Faserverstärkung eine höhere mechanische Stabilität aufweisen als Schubkörper aus demselben (oder einem ähnlichen) Material ohne Faserverstärkung. Die Gefahr einer Zerstörung der Schubkörper während des Straffvorgangs ist somit reduziert und ein störungsfreier Straffvorgang noch sicherer.

Besonders bevorzugt weisen die Fasern im faserverstärkten Schubkörper eine Vorzugsorientierung auf. Durch eine geeignete Ausrichtung der Vorzugsorientierung kann die Bruchgefahr der Schubkörper noch weiter reduziert werden.

Bevorzugt wird der faserverstärkte Schubkörper derart im Zuführungsrohr geführt, dass dessen Ausrichtung und damit die Ausrichtung der Fasern während der Bewegung durch das Zuführungsrohr - bezogen auf die jeweilige Bewegungsrichtung - gleich bleiben. Eine solche ausrichtungserhaltende Führung kann durch eine "führende" Formgebung des Innenquerschnitts des Zuführungsrohres (z. B. durch Führungsnuten oder einen eckigen Querschnitt) oder eine feste oder lose Kettenbildung der Schubkörper erreicht werden. Auf die letztgenannte bevorzugte Ausgestaltung wird weiter unten noch näher eingegangen. Besonders bevorzugt weist zumindest die Hälfte der Fasern des faserverstärkten Schubkörpers einen Winkel von weniger als 45 Grad zu einer mittleren Faserhauptrichtung auf. Die mittlere Faserhauptrichtung bildet somit eine Vorzugsorientierung der Fasern im faserverstärkten Schubkörper.

Als vorteilhaft wird es angesehen, wenn der faserverstärkte Schubkörper derart im Zuführungsrohr geführt wird, dass der Winkel zwischen der Faserhauptrichtung und der jeweiligen Bewegungsrichtung stets kleiner als 45 Grad ist. Bei dieser Ausgestaltung kann erreicht werden, dass die stabilitätserhöhende Wirkung der Fasern erhalten bleibt, auch wenn die Schubkörper durch gekurvte Abschnitte des Zuführungsrohres geführt werden.

Der Winkel zwischen der Faserhauptrichtung und der jeweiligen Bewegungsrichtung ist vorzugsweise stets kleiner als 10 Grad (zum Beispiel 0 Grad ± 5 Grad). Besonders bevorzugt entspricht die Faserhauptrichtung der jeweiligen Bewegungsrichtung.

Die Schubkörper können beispielsweise eine Tonnenform aufweisen und/oder im Querschnitt rund, elliptisch oder eckig sein. Als besonders vorteilhaft wird es jedoch angesehen, wenn die faserverstärkten Schubkörper eine Symmetrieachse aufweisen. Der Winkel zwischen der Symmetrieachse und der Faserhauptrichtung ist vorzugsweise kleiner als 10 Grad (zum Beispiel 0 Grad ± 5 Grad), besonders bevorzugt liegen die Symmetrieachse und die Faserhauptrichtung aufeinander. Die Symmetrie des Schubkörpers kann beispielsweise eine Rotationssymmetrie oder eine Drehsymmetrie sein.

Besonders bevorzugt wird der faserverstärkte Schubkörper derart im Zuführungsrohr geführt, dass der Winkel zwischen der Symmetrieachse und der jeweiligen Bewegungsrichtung während der Bewegung durch das Zuführungsrohr kleiner als 45 Grad, besonders bevorzugt kleiner als 10 Grad (zum Beispiel 0 Grad ± 5 Grad), ist.

Werden die Schubkörper im Rahmen eines Guss- oder Spritzgussverfahrens hergestellt, so wird es als vorteilhaft angesehen, wenn das Anspritzen in einem Winkel zwischen 0 Grad und 30 Grad - bezogen auf die Längsachse des Schubkörpers bzw. bezogen auf die spätere Bewegungsrichtung der Schubkörper - erfolgt. Im Falle eines solchen Einspritzwinkels lässt sich in besonders vorteilhafter Weise eine automatische Ausrichtung der Längsrichtung der Fasern des Gussmaterials in Schubkörperlängsrichtung und somit entlang der späteren Bewegungsrichtung der Schubkörper erreichen.

Zumindest zwei im Zuführungsrohr aufeinander folgende Schubkörper sind vorzugsweise abschnittweise ineinander gesteckt und bilden eine (mindestens zweigliedrige) Schubkörperkette. Die abschnittsweise ineinander gesteckten Schubkörper sind vorzugsweise lose bzw. lösbar gesteckt und bilden eine lösbare Schubkörperkette.

Zur losen Kettenbildung weist zumindest ein im Zuführungsrohr befindlicher Schubkörper vorzugsweise mindestens einen Steckabschnitt auf, der in eine Ausnehmung eines im Zuführungsrohr benachbarten Schubkörpers eingesteckt ist. Der Steckabschnitt und die Ausnehmung sind bevorzugt derart bemessen, dass sich die ineinander gesteckten Schubkörper relativ zueinander verschwenken lassen. Dies ermöglicht es, die sich bildende Schubkörperkette zu biegen und durch Kurvenbereiche im Zuführungsrohr zu schieben. Durch die Kombination von Steckabschnitt und Ausnehmung lässt sich erreichen, dass die Ausrichtung der Schubkörper relativ zur jeweiligen Bewegungsrichtung während des Straffvorgangs erhalten bleibt.

Auch wird es als vorteilhaft angesehen, wenn zwei oder mehr Schubkörper unter Bildung einer Zweiergruppe (Schubkörperpaar), einer Dreiergruppe oder einer mehrgliedrigen Schubkörperkette fest miteinander verbunden sind.

Zur Bildung einer nichtlösbaren Schubkörperkette werden die Schubkörper beispielsweise miteinander verbunden, und zwar vorzugsweise durch ein oder mehrere strangförmige Glieder.

Gemäß einer ersten besonders bevorzugten Variante werden die Schubkörper der Schubkörperkette miteinander durch Stege verbunden. Die Stege werden vorzugsweise bereits bei der Herstellung der Schubkörper gebildet. Bevorzugt wird die Schubkörperkette im Rahmen eines Spritzgussverfahrens hergestellt, bei dem die Schubkörper der Schubkörperkette sowie die Stege gemeinsam gegossen werden. Der Anspritzpunkt oder die Anspritzpunkte des die Fasern enthaltenden Spritzgussmaterials bzw. der oder die Einspritzpunkte des Spritzgussmaterials in die Spritzgussform liegen vorzugsweise zumindest auch am oder im Bereich des Endes der Schubkörperkette. Besonders bevorzugt wird in einem Winkel zwischen 0 Grad und 30 Grad - bezogen auf die Längsachse der Schubkörperkette bzw. bezogen auf die spätere Bewegungsrichtung der Schubkörper - eingespritzt. Im Falle eines Einspritzpunktes im Bereich des Kettenendes und/oder durch die Wahl eines entsprechenden Einspritzwinkels lässt sich das Spritzgussmaterial besonders einfach durch die Stegbereiche der Spritzgussform hindurchpressen, wodurch sich in besonders vorteilhafter Weise eine automatische Ausrichtung der Längsrichtung der Fasern des Spritzgussmaterials in Kettenlängsrichtung und somit entlang der späteren Bewegungsrichtung der Schubkörper ergibt, weil die Fasern beim Passieren der Stegbereiche automatisch ausgerichtet werden.

Gemäß der Erfindung werden die Schubkörper durch ein biegsames strangförmiges Glied, insbesondere ein Seil oder ein Draht, miteinander verbunden. Das strangförmige Glied ist vorzugsweise durch zumindest zwei Schubkörper hindurchgeführt.

Das strangförmige Glied ist in dem faserverstärkten Material zumindest zweier Schubkörper eingebettet, insbesondere mit dem faserverstärkten Material zumindest zweier Schubkörper vergossen. Auch in diesem Falle wird es als vorteilhaft angesehen, wenn das Anspritzen in einem Winkel zwischen 0 Grad und 30 Grad - bezogen auf die Längsachse der Schubkörperkette bzw. bezogen auf die spätere Bewegungsrichtung der Schubkörper - erfolgt. Im Falle eines solchen Anspritzwinkels lässt sich in besonders vorteilhafter Weise eine automatische Ausrichtung der Längsrichtung der Fasern des Spritzgussmaterials in Kettenlängsrichtung und somit entlang der späteren Bewegungsrichtung der Schubkörper erreichen.
Bei einer besonders bevorzugten Ausgestaltung ist vorgesehen, dass zumindest einer der Schubkörper aus einem faserverstärkten, beispielsweise glasfaserverstärkten, Kunststoff besteht oder ein solches Material zumindest auch aufweist.

Ein wesentlicher Vorteil ist darin zu sehen, dass dieser ein niedrigeres Gewicht als vorbekannte Gurtaufroller aufweisen kann. Dies liegt daran, dass faserverstärkter Kunststoff eine geringere Dichte als Metall aufweist. Die Gewichtsreduktion des Schubkörperpakets kann bei Einsatz von faserverstärktem Kunststoff bis zu 80% betragen, verglichen mit einem Schubkörperpaket aus Metall.

Ein weiterer wesentlicher Vorteil ist darin zu sehen, dass dieser auch im Falle einer äußeren Wärmeeinwirkung noch sicher funktioniert. Im Unterschied zu Metallschubkörpern weisen nämlich faserverstärkte Schubkörper die vorteilhafte Eigenschaft auf, dass sie im Zuführungsrohr auch im Falle einer äußeren Erwärmung weniger häufig verklemmen, als dies bei Schubkörpern aus Metall der Fall ist. Ein Klemmen der Schubkörper kann beispielsweise auf einer Deformation, einem Schmelzen und/oder einer Volumenvergrößerung der Schubkörper im Falle einer äußeren Erwärmung beruhen; ein solches temperaturbedingtes Klemmen der Schubkörper ist bei Schubkörpern aus faserverstärktem Kunststoff weniger stark ausgeprägt als bei Metallschubkörpern.

Ein dritter wesentlicher Vorteil liegt in den geringeren Herstellungskosten gegenüber konventionellen Gurtaufrollern, da faserverstärkter Kunststoff deutlich kostengünstiger als Metall ist.

Ein vierter wesentlicher Vorteil ist darin zu sehen, dass das erfindungsgemäße Antriebssystem schneller ist als die entsprechenden Antriebssysteme bei vorbekannten Gurtaufrollern; dies liegt daran, dass die Massenträgheit von Schubkörpern aus faserverstärktem Kunststoff wegen der geringeren Dichte geringer ist als die Massenträgheit von Metallschubkörpern.

Ein fünfter wesentlicher Vorteil besteht darin, dass die Geräuschentwicklung während des Betriebs geringer ist als bei Gurtaufrollern aus Metall.

Ein sechster wesentlicher Vorteil ist darin zu sehen, dass der Aufnahmebehälter, in dem die Schubkörper nach Auslösen des Antriebs aufgefangen werden, weniger stark belastet wird, als dies bei Schubkörpern aus Metall der Fall ist. Dies liegt daran, dass faserverstärkter Kunststoff □ wie bereits erwähnt □ eine geringere Dichte aufweist und somit die Masse, die der Auffangkörper auffangen muss, geringer ist als bei Schubkörpern aus Metall.
Vorzugsweise bestehen alle Schubkörper aus faserverstärktem Kunststoff.
Bei den Fasern des faserverstärkten Kunststoffs handelt es sich vorzugsweise (ausschließlich oder zumindest auch) um Glasfasern, jedoch können auch Fasern aus einem anderen Material, wie beispielsweise aus Keramik oder Kohlenstoff (Carbonfasern), eingesetzt werden. Bei dem Schubkörpermaterial kann es sich also beispielsweise um glasfaserverstärkten Kunststoff handeln.
Für den beschriebenen Einsatz besonders geeignete Kunststoffmaterialien sind Polyamid und Polyphthalamid; demgemäß wird es als vorteilhaft angesehen, wenn der faserverstärkte Kunststoff Polyamid und/oder Polyphthalamid zumindest auch aufweist.
Wird Polyamid eingesetzt, so wird vorzugsweise ein wärmestabilisiertes, teilkristallines Polyamid verwendet.
Besonders bevorzugt ist der faserverstärkte Kunststoff mit Langfasern (z. B. Langglasfasern) verstärkt. Vorzugsweise weisen die Fasern des faserverstärkten Kunststoffs eine Länge von mindestens 0,2 mm, besonders bevorzugt eine Länge von mindestens 0,5 mm, auf.

Der Faseranteil des faserverstärkten Kunststoffs beträgt vorzugsweise mindestens 20 %, besonders bevorzugt mindestens 50 o %.

Die Dichte des faserverstärkten Kunststoffs beträgt vorzugsweise maximal 2,0 g/cm³, besonders bevorzugt maximal 1,6 g/cm³.

Auch wird es als vorteilhaft angesehen, wenn der faserverstärkte Kunststoff schlagzähmodifiziert ist.

Die Bruchdehnung des faserverstärkten Kunststoffs beträgt vorzugsweise maximal 5 %, besonders bevorzugt maximal 3 % oder maximal 2 %.

Die Bruchspannung des faserverstärkten Kunststoffs beträgt vorzugsweise mindestens 200 N/mm². Als vorteilhaft wird ein Bruchspannungsbereich zwischen 200 und 300 N/mm² angesehen.

Der faserverstärkte Kunststoff kann beispielsweise durch GRI-VORY GVL-6H-Material gebildet sein oder ein solches Material zumindest auch enthalten.

Im Übrigen wird es als vorteilhaft angesehen, wenn zwischen dem Antriebsrad und der Gurtspindel eine Massenträgheitskupplung angeordnet ist, die Kupplungselemente umfasst, die bei einem Beschleunigen des Antriebsrades ausschwenken und unmittelbar oder mittelbar mit der Gurtspindel verkuppeln. Ein Vorteil dieser Ausgestaltung ist darin zu sehen, dass durch die Schwenkbarkeit der Kupplungselemente ein Wiederauskuppeln nach dem Ende des Straffvorgangs möglich ist, wodurch der Strafferantrieb von der Gurtspindel wieder getrennt werden kann.

Vorzugsweise sind Kontaktflächen der Kupplungselemente derart ausgeformt, dass sie in Straffdrehrichtung unter Last eingekuppelt bleiben und im lastfreien Zustand und/oder in Gurtbandauszugsrichtung auskuppelbar sind.

Die Kupplungselemente können beispielsweise durch Kupplungsklauen, Kupplungsklinken, Kupplungstonnen oder Kupplungskeile gebildet sein.

Bevorzugt weist die Gurtspindel eine rohrförmige Innenwand auf, in die sich die Kontaktflächen der Kupplungselemente beim Ausschwenken unmittelbar eindrücken. Bei dieser Ausgestaltung sind die Teileanzahl und damit auch das Gewicht des Gurtaufrollers optimal. Die Kontaktflächen der Kupplungselemente sind vorzugsweise geriffelt.

Gemäß einer besonders bevorzugten Ausgestaltung des Gurtaufrollers ist vorgesehen, dass die geriffelten Kontaktflächen der Kupplungselemente sägezahnförmig sind und abwechselnd steile und flache Flanken aufweisen.

Vorzugsweise sind die steilen und flachen Flanken derart ausgeformt, dass die Kraftübertragung zu der Gurtspindel zumindest im Wesentlichen durch die flachen Flanken erfolgt.

Vorzugsweise weist die Massenträgheitskupplung eine mit dem Antriebsrad in Verbindung stehende Kupplungsscheibe auf, die durch einen Innenring, einen Außenring und mindestens ein federndes Verbindungselement gebildet ist, wobei die Kupplungselemente und eine Führungsscheibe der Massenträgheitskupplung derart in die Kupplungsscheibe eingelegt sind, dass bei einem Beschleunigen des Antriebsrads durch den Gasgenerator der Innenring und die Führungsscheibe gegenüber dem Außenring aufgrund der federnden Wirkung des oder der federnden Verbindungselemente relativ verdreht werden, so dass Anschläge des Außenrings die Kupplungselemente nach außen schwenken.

Bevorzugt sind die federnden Verbindungselemente derart ausgebildet, dass bei Nachlassen der Straffkraft des Strafferantriebs die Relativdrehung zwischen dem Innenring und dem Außenring aufgehoben wird, so dass die Kupplungselemente von weiteren Anschlägen des Außenrings zurück in ihre Ausgangslage vor dem Straffvorgang geschwenkt werden.

Um ein ruckarmes Einkuppeln in jeder beliebigen Winkelposition der Gurtspindel und der Kupplungselemente zu gewährleisten, wird es als vorteilhaft angesehen, wenn die rohrförmige Innenwand vor dem erstmaligen Kontakt mit den Kupplungselementen glatt ist.

Die Erfindung bezieht sich außerdem auf ein Verfahren zum Herstellen eines Gurtaufrollers. Erfindungsgemäß ist vorgesehen, dass faserverstärkte Schubkörper oder eine Schubkörperkette aus faserverstärkten Schubkörpern durch Gießen oder Spritzgießen gebildet werden.

Die Erfindung wird nachfolgend anhand von Ausführungsbeispielen näher erläutert; dabei zeigen beispielhaft
- Figuren 1-14: ein erstes Ausführungsbeispiel für einen erfindungsgemäßen Gurtaufroller in verschiedenen Sichten,
- Figuren 15-16: ein zweites Ausführungsbeispiel für einen erfindungsgemäßen Gurtaufroller,
- Figur 17: ein Ausführungsbeispiel für ein Schubkörperpaar aus zwei miteinander verbundenen Schubkörpern aus faserverstärktem Kunststoff,
- Figuren 18-20: ein Ausführungsbeispiel, bei dem die Schubkörper eine lose Schubkörperkette bilden,
- Figuren 21-23: ein Ausführungsbeispiel, bei dem die Schubkörper eine fest verbundene Schubkörperkette bilden und
- Figur 24: ein Ausführungsbeispiel mit einer Schubkörperkette, bei der die Schubkörper durch Verbindungsstege verbunden sind.

In den Figuren werden der Übersicht halber für identische oder vergleichbare Komponenten stets dieselben Bezugszeichen verwendet.

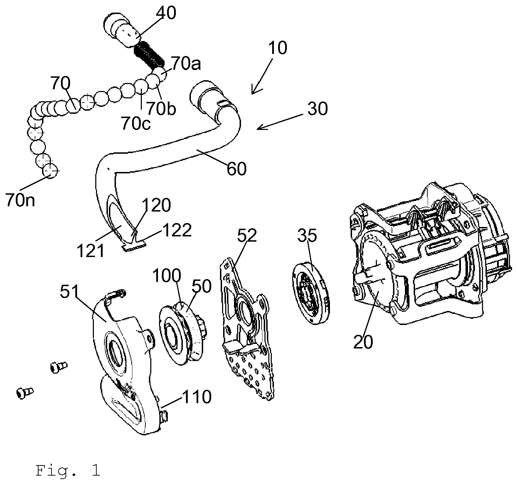

In der Figur 1 sieht man in einer schematischen Explosionsdarstellung ein Ausführungsbeispiel für einen Gurtaufroller 10. Der Gurtaufroller 10 weist unter anderem eine Gurtspindel 20, einen Strafferantrieb 30 sowie eine den Strafferantrieb 30 und die Gurtspindel 20 verbindende Massenträgheitskupplung 35 auf.

Der Strafferantrieb 30 umfasst einen pyrotechnischen Gasgenerator 40, beispielsweise in Form eines Mikrogasgenerators, ein Antriebsrad 50, ein den Gasgenerator 40 und das Antriebsrad 50 verbindendes gekrümmtes Zuführungsrohr 60 sowie eine Mehrzahl an Masse- bzw. Schubkörpern 70.

Die Schubkörper 70 sind beispielsweise kugelförmig. Vorzugsweise bestehen alle Schubkörper aus einem glasfaserverstärkten Kunststoff. Alle Schubkörper sind vorzugsweise untereinander identisch.

Das Antriebsrad 50 ist zwischen einer Haltekappe 51 und einer Halteplatte 52 drehbar gehalten und weist Aufnahmeschalen 100 auf, in die die Schubkörper 70 eingreifen, um das Antriebsrad anzutreiben. Die Schubkörper 70 werden hierzu tangential in das Antriebsrad 50 eingekoppelt und laufen an diesem unter Eingriff in die Aufnahmeschalen 100 tangential vorbei, um anschließend in einen nachgeordneten Aufnahmebehälter 110 zu gelangen.

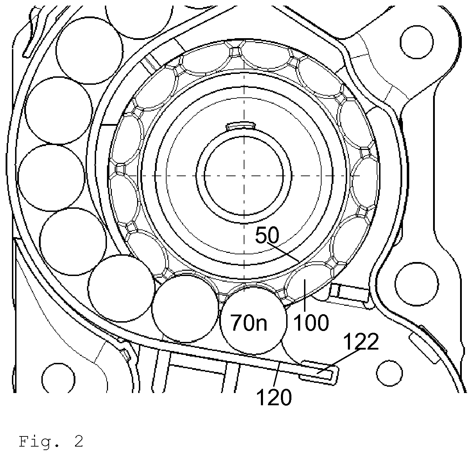

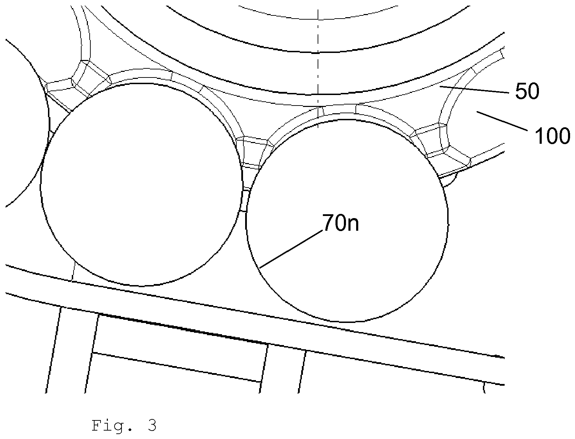

Die Aufnahmeschalen 100 des Antriebsrades 50 sind vorzugsweise derart ausgeformt, dass die Schubkörper 70 bei Eingriff in das Antriebsrad 50 stets einen Abstand zueinander aufweisen und sich nicht berühren; dies ist beispielhaft in den Figuren 2 und 3 näher gezeigt. Die Kraftübertragung erfolgt dabei bevorzugt durch einen Formschluss oder zumindest auch durch einen Formschluss. Die Anzahl der Schubkörper 70 ist vorzugsweise größer als die Anzahl der Aufnahmeschalen 100 des Antriebsrades 50, so dass sich das Antriebsrad 50 mehr als nur einmal komplett um die eigene Achse drehen kann.

Vorzugsweise erfolgt die Abdichtung des Zuführungsrohres 60 allein durch die Schubkörper, beispielsweise die Schubkörper 70a, 70b und 70c, die - vom Gasgenerator 40 aus gesehen □ die ersten Schubkörper 70 im Zuführungsrohr 60 bilden. Eine Abdichtung des Zuführungsrohres ist ansonsten nicht erforderlich, kann aber dennoch zusätzlich vorgesehen werden.

Bevorzugt weist das Zuführungsrohr 60 im Einkoppelbereich 120, in dem die Schubkörper 70 in das Antriebsrad 50 einkoppeln, einen nachgiebigen Rohrwandabschnitt 120 auf, durch den das Einkoppelverhalten optimiert und ein Verklemmen der Schubkörper in dem Antriebsrad 50 vermieden wird. Der nachgiebige Rohrwandabschnitt 120 kann beispielsweise ein flaches Abschnittsende 121 mit einem T-förmigen Befestigungselement 122 aufweisen.

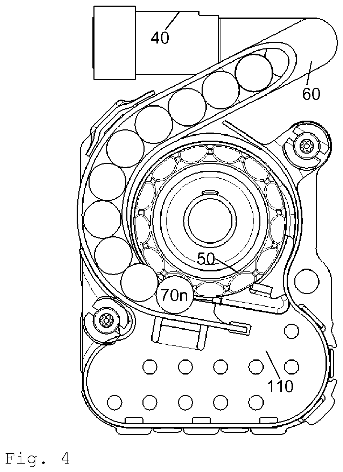

Der erste Schubkörper, also der dem Antriebsrad nächste Schubkörper, ist im Auslieferungszustand des Strafferantriebs 30 in einer Aufnahmeschale 100 des Antriebsrades 50 vorzugsweise vorfixiert, indem das Antriebsrad 50 selbst mittels einer aufbrechbaren Fixierung, beispielsweise in Form eines Scherstifts, vorfixiert ist; dies zeigt die Figur 4 näher.

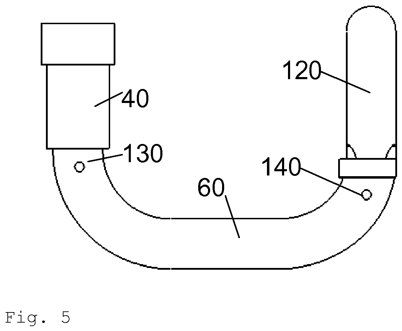

Wie sich in der Figur 5 erkennen lässt, ist das Zuführungsrohr 60 vorzugsweise mit zwei Löchern ausgestattet, nämlich einem Überdruckloch 130 im Bereich des Gasgenerators 40 und einem Steuerungsloch 140 im Mittenbereich des Zuführungsrohres 60 zwischen dem Gasgenerator 40 und dem Antriebsrad 50.

Das Steuerungsloch 140 kann beispielsweise durch eine Öffnung im Zuführungsrohr 60 gebildet sein; durch diese Öffnung wird der Druck im Zuführungsrohr 60 reduziert, wenn der letzte Schubkörper - also der dem Gasgenerator 40 nächstliegende Schubkörper - diese Öffnung passiert. Durch den Druckabfall wird die Strafferkraft des Strafferantriebs 30 reduziert, so dass beispielsweise der Straffvorgang aufgrund der gegenwirkenden Gurtauszugskraft gestoppt werden kann. Die Öffnung ist jedoch vorzugsweise so klein dimensioniert, dass der Druckabfall den Straffvorgang allein nicht beenden würde und trotz Druckabfalls alle Schubkörper 70 in den Aufnahmebehälter 110 geschossen werden würden, wenn dies keine ausreichend große Gurtauszugskraft verhindert.

Das Überdruckloch 130 verhindert vorzugsweise einen Überdruck des Strafferantriebs 30.

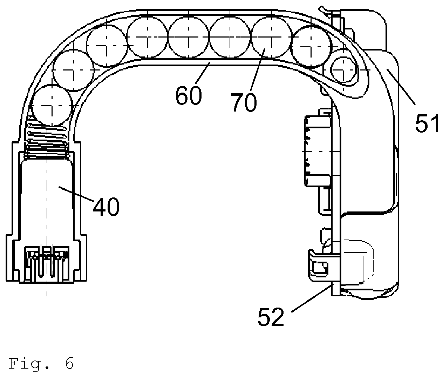

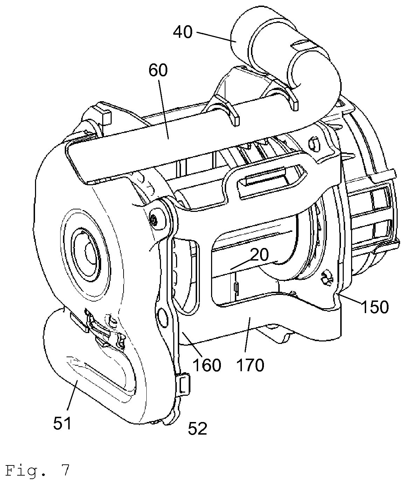

In der Figur 6 ist der Strafferantrieb 30 nochmals in einer anderen Sicht von oben gezeigt; die Figur 7 zeigt den Gurtaufroller 10 im montierten Zustand. Den beiden Figuren 6 und 7 lässt sich entnehmen, dass der Gasgenerator 40 und das Antriebsrad 50 an verschiedenen Abschnitten 150 und 160 eines C-förmigen Trägers 170 des Gurtaufrollers 10 befestigt sind und räumlich durch die Gurtspindel 20 voneinander getrennt sind.

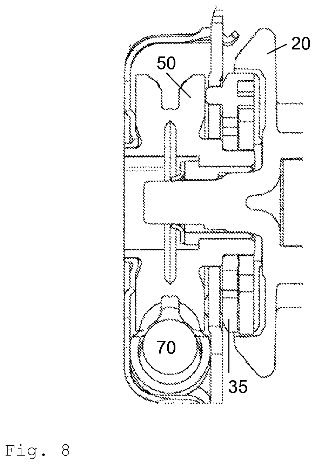

In der Figur 8 ist die Ankopplung des Antriebsrades 50 an die Massenträgheitskupplung 35 und deren Ankopplung an die Gurtspindel 20 in einem Schnitt nochmals näher gezeigt.

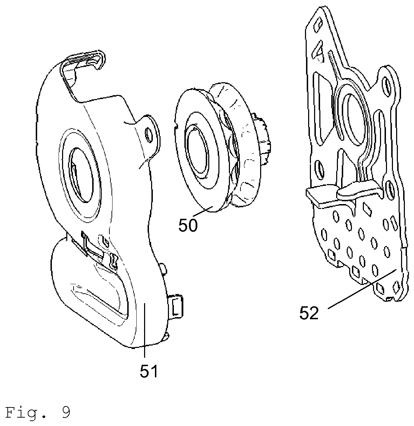

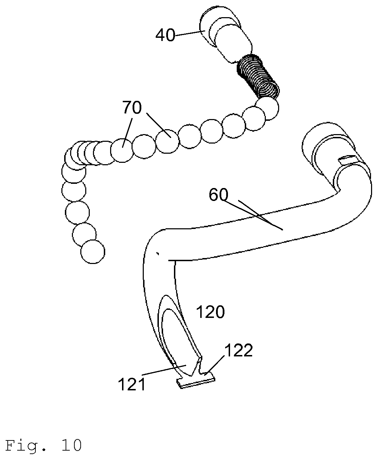

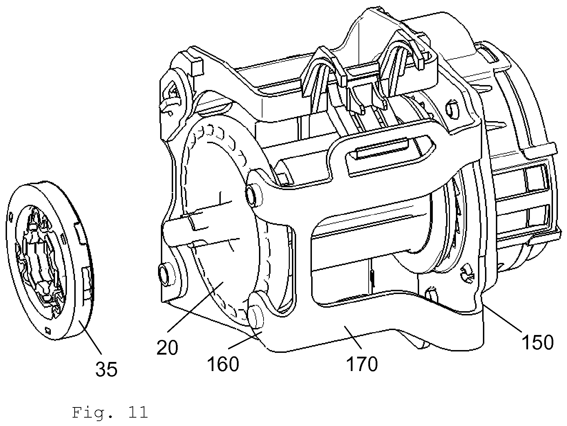

Die Figuren 9, 10 und 11 zeigen die Komponenten gemäß der Figur 1 nochmals größer im Detail.

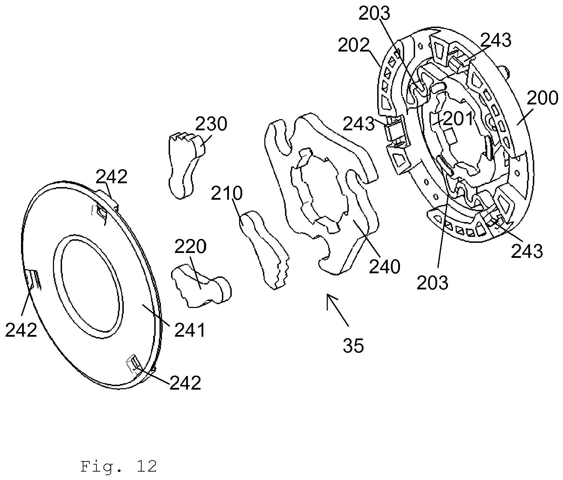

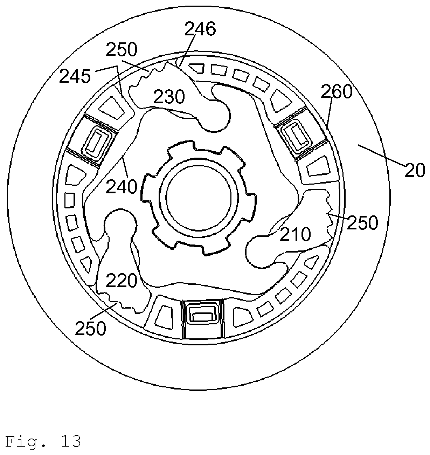

In den Figuren 12, 13 und 14 ist der Aufbau der Massenträgheitskupplung 35 beispielhaft gezeigt. Man erkennt eine mit dem Antriebsrad 50 verbundene und von diesem angetriebene Kupplungsscheibe 200, die durch einen Innenring 201, einen Außenring 202 und federnde Verbindungselemente 203 gebildet ist. Drei ausschwenkbare Kupplungselemente 210, 220 und 230 sowie eine Führungsscheibe 240 sind in die Kupplungsscheibe 200 eingelegt. Um ein Herausfallen der Kupplungselemente 210, 220 und 230 aus der Führungsscheibe 240 zu vermeiden, kann beispielsweise eine Deckplatte 241 vorhanden sein, die zum Beispiel mit Hilfe von Rastelementen 242 und 243 an der Kupplungsscheibe 200 verrastet wird. Die Figur 13 zeigt die relative Lage zwischen der Führungsscheibe 240 und dem Außenring 202 im Ausgangszustand.

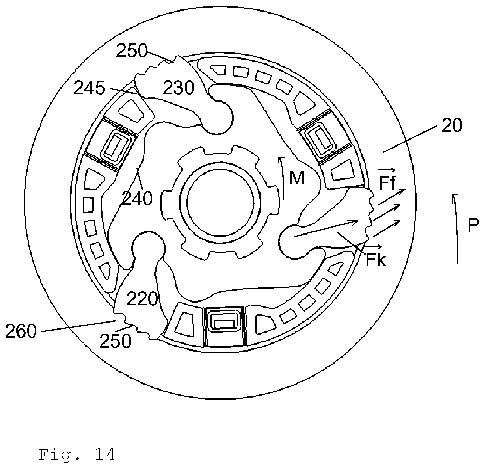

Der Innenring 201 und die Führungsscheibe 240 sind mit dem Antriebsrad drehfest verbunden. Wird das Antriebsrad 50 in der Drehrichtung P durch das Drehmoment M des Strafferantriebs 30 beschleunigt, so wird der Innenring 201 gegenüber dem Außenring 202 aufgrund der federnden Wirkung der federnden Verbindungselemente 203 massenträgheitsbedingt relativ verdreht, so dass Anschläge 245 des Außenrings 202 die Kupplungselemente 220, 230 und 240 nach außen schwenken (vgl. Fig. 14) und sich diese mit ihren geriffelten Kontaktflächen 250 in die vorzugsweise glatte, also ohne Riffelung oder dergleichen ausgeformte rohrförmige Innenwand 260 der Gurtspindel 20 einschlagen, wodurch die Kupplungselemente mit der Gurtspindel 20 verbunden werden und die Kupplung einkuppelt. Die Kraft der Kupplungselemente ist mit dem Kraftvektor *F̅k* gekennzeichnet. Die Kraftübertragung durch die flachen Flanken ist mit dem Kraftvektor *F̅f* gekennzeichnet.

Lässt die Straffkraft des Strafferantriebs 30 nach, beispielsweise weil der Gasgenerator 40 verbraucht ist und keinen ausreichenden Antriebsdruck mehr bereitstellen kann, oder wird nach Abschluss des Straffvorgangs die Gurtspindel in Gurtauszugsrichtung gedreht, so wird die Relativdrehung zwischen dem Innenring 201 und dem Außenring 202 aufgrund der federnden Wirkung der federnden Verbindungselemente 203 wieder aufgehoben, so dass die Kupplungselemente 210, 220 und 230 von weiteren Anschlägen 246 des Außenrings 202 zurück in ihre Ausgangslage (vgl. Figur 13) vor dem Straffvorgang geschwenkt und von der Gurtspindel 20 wieder getrennt werden, so dass das Antriebsrad 50 in Gurtauszugsrichtung nicht mitgedreht werden kann.

Das Einschlagen der Kupplungselemente in die Innenwand 260 sowie das Zurückschwenken der Kupplungselemente zum Zwecke des Auskuppelns wird durch die sägezahnförmige Formgebung der Kontaktflächen 250 sehr erleichtert, die abwechselnd steile und flache Flanken aufweisen. Wie sich der Figur 14 entnehmen lässt, ist die sägezahnförmige Formgebung derart gewählt, dass die Kraftübertragung relativ zu der Innenwand 260 durch die flachen Flanken erfolgt. Die flachen Flanken weisen während des Kupplungszustandes einen flacheren Winkel zu der Innenwand 260 auf als die steilen Flanken. Es lässt sich erkennen, dass der Kraftvektor der flachen Flanken *F̅f* gegenüber dem Kraftvektor *F̅k* der Kupplungselemente durch die Ausrichtung der flachen Flanken verdreht ist, und zwar um einen Winkel zwischen vorzugsweise 0 und 45 Grad sowie in Richtung des Drehmoments M bzw. in Straffdrehrichtung P.

In dem Kraftübertragungspfad zwischen dem Strafferantrieb 30 und der Gurtspindel 20 ist vorzugsweise kein Gurtkraftbegrenzungsmechanismus vorgesehen, also weder zwischen dem Antriebsrad 50 und der Massenträgheitskupplung 35 noch zwischen der Massenträgheitskupplung 35 und der Gurtspindel 20. Eine Gurtkraftbegrenzung findet bevorzugt nur in Gurtbandauszugsrichtung statt, und zwar durch einen nicht weiter dargestellten Torsionsstab, der mit einem Ende starr mit der Gurtspindel 20 und mit seinem anderen Ende mit einem Sperrmechanismus des Gurtaufrollers 10 verbunden ist.

Der Gurtaufroller ist vorzugsweise fest am Fahrzeugrahmen (rahmenfest) befestigt. Jeder Strafferantrieb, beispielsweise für Beckengurtstraffung und/oder Schultergurtstraffung, hat vorzugsweise jeweils seinen eigenen Gasgenerator.

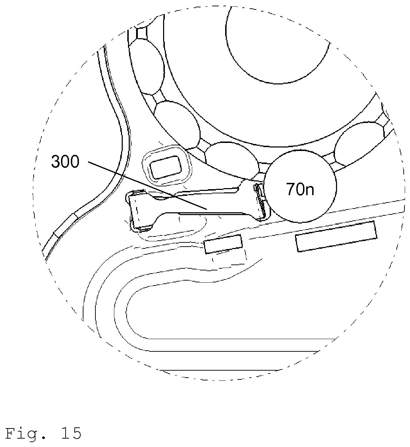

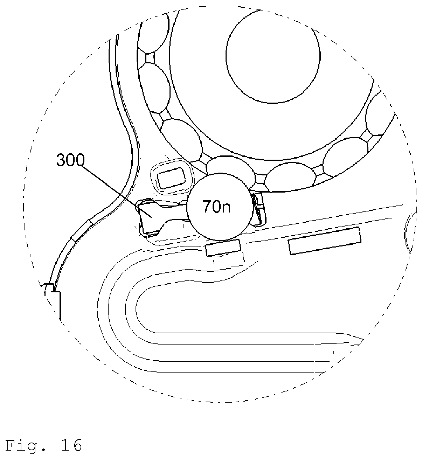

In den Figuren 15 und 16 ist ein weiteres Ausführungsbeispiel für einen Gurtaufroller 10 gezeigt. Bei diesem Ausführungsbeispiel ist eine Rücklaufsperrvorrichtung in Form eines schwenkbaren Federelements 300 vorhanden, das von den an dem Antriebsrad 50 vorbeilaufenden Schubkörpern nur in einer Richtung passiert werden kann, nämlich in Richtung zum Aufnahmebehälter 110. Das Federelement 300 verhindert somit, dass beispielsweise der letzte Schubkörper 70n nach Abschluss des Straffvorgangs wieder zum Antriebsrad 50 zurückbewegt werden kann.

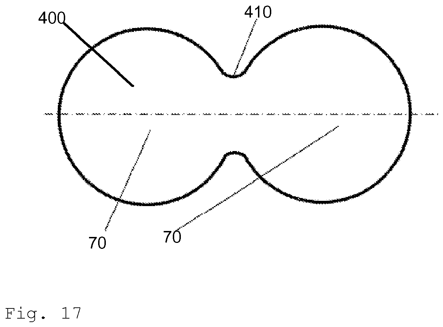

In der Figur 17 ist ein Ausführungsbeispiel für ein Schubkörperpaar 400 aus zwei miteinander verbundenen Schubkörpern 70, die jeweils aus faserverstärktem Kunststoff bestehen, dargestellt. Auch der Verbindungsbereich 410 zwischen den beiden Schubkörpern 70 besteht vorzugsweise aus faserverstärktem Kunststoff.

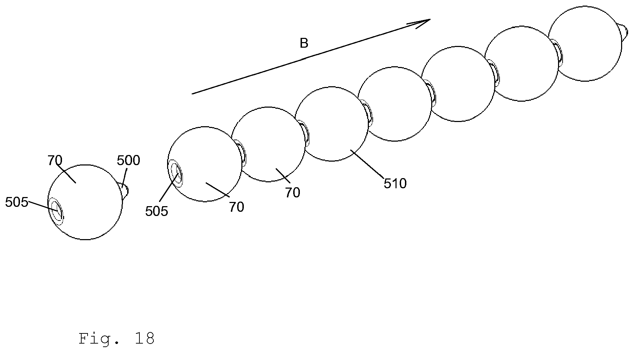

Die Figur 18 zeigt ein Ausführungsbeispiel, bei dem die Schubkörper 70 lose ineinander gesteckt sind. Hierzu weisen die Schubkörper 70 jeweils einen Steckabschnitt 500 in Form einer Stecknase auf, der in eine sacklochförmige Ausnehmung 505 im jeweils benachbarten Schubkörper 70 eingesteckt ist. Durch das Ineinanderstecken der Schubkörper 70 wird eine lose Schubkörperkette 510 gebildet, deren Längsrichtung der Bewegungsrichtung B der Schubkörper 70 im Zuführungsrohr des Gurtaufrollers entspricht.

Durch die Bildung der Schubkörperkette 510 wird eine Führung der Schubkörper 70 im Zuführungsrohr erreicht, und zwar derart, dass die Ausrichtung der Schubkörper in der Schubkörperkette 510 und die Ausrichtung der Schubkörper im Zuführungsrohr während der Bewegung durch das Zuführungsrohr - bezogen auf die jeweilige Bewegungsrichtung B - gleich bleibt.

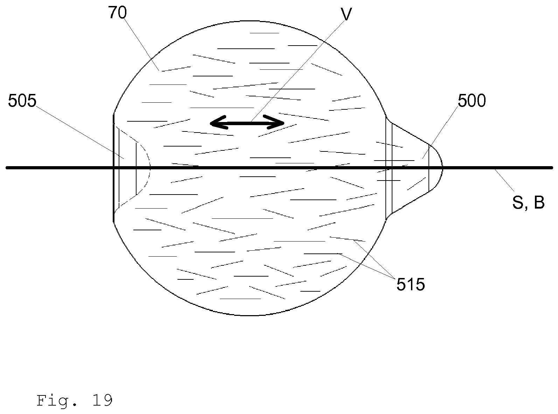

Die Figur 19 zeigt einen der Schubkörper 70 gemäß Figur 18 im Querschnitt. Man erkennt, dass der Schubkörper 70 aus einem faserhaltigen Material besteht. Die Fasern 515 im faserverstärkten Schubkörper 70 sind nicht beliebig orientiert, sondern weisen eine Vorzugsorientierung auf. Die Vorzugsorientierung ergibt sich dadurch, dass zumindest die Hälfte der Fasern 515 einen Winkel von weniger als 45 Grad zu einer mittleren Faserrichtung - hier Faserhauptrichtung genannt - aufweist, die in der Figur 19 mit dem Bezugszeichen V gekennzeichnet ist. Die Vorzugsorientierung der Fasern definiert also die Faserhauptrichtung V.

In der Figur 19 lässt sich außerdem erkennen, dass der faserverstärkte Schubkörper 70 rotationssymmetrisch ist und eine Symmetrieachse S aufweist. Die Symmetrieachse S ist vorzugsweise mit der Faserhauptrichtung V identisch, zumindest sollte der Winkel zwischen der Symmetrieachse S und der Faserhauptrichtung V vorzugsweise kleiner als 10 Grad sein. Durch diese Faserausrichtung wird in vorteilhafter Weise eine besonders hohe Stabilität der Schubkörper 70 in der Bewegungsrichtung B erreicht, so dass die Schubkörper die hohen mechanischen Belastungen gerade in der Beschleunigungsphase aushalten können.

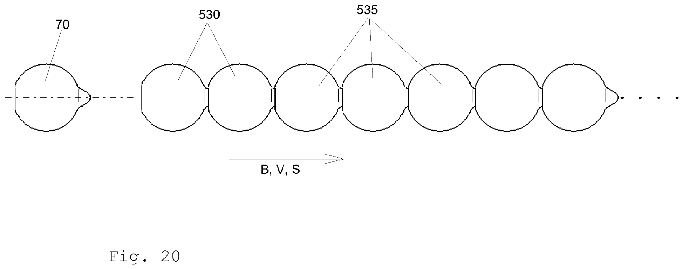

Bei dem Ausführungsbeispiel gemäß den Figuren 18 und 19 sind die Schubkörper 70 durch das Ineinanderstecken lose miteinander verbunden. Alternativ können auch Gruppen von zwei oder mehr Schubkörpern fest miteinander verbunden sein und beispielsweise Zweier- oder Dreiergruppen bilden. Solche Zweier- und Dreiergruppen sind beispielhaft in der Figur 20 gezeigt und mit den Bezugszeichen 530 und 535 gekennzeichnet.

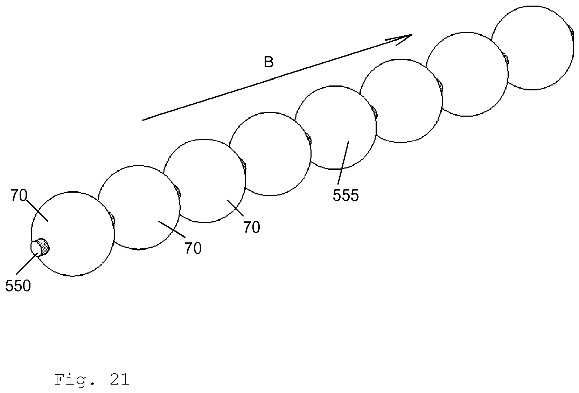

Die Figur 21 zeigt ein Ausführungsbeispiel, bei dem die Schubkörper 70 durch ein biegsames strangförmiges Glied 550 miteinander verbunden sind. Durch das strangförmige Glied 550 wird eine mechanisch flexible Schubkörperkette 555 gebildet.

Bei dem biegsamen strangförmigen Glied 550 kann es sich beispielsweise um ein Seil oder einen Draht handeln. Das biegsame strangförmige Glied 550 besteht vorzugsweise aus Kunststoff und/oder Metall, beispielsweise Stahl.

Die Schubkörperkette 555 gemäß Figur 21 wird vorzugsweise im Rahmen eines Guss-, insbesondere Spritzgussverfahrens hergestellt, bei dem das strangförmige Glied 550 in das faserhaltige Material der Schubkörper eingegossen wird.

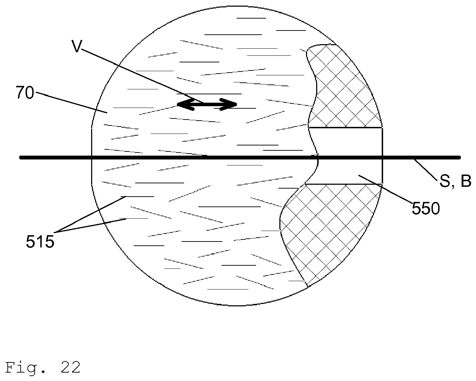

Die Figur 22 zeigt einen der Schubkörper 70 der Schubkörperkette 555 gemäß Figur 21 im Querschnitt. Es lässt sich erkennen, dass das strangförmige Glied 550 in das faserhaltige Material der Schubkörper eingebettet, vorzugsweise eingegossen, ist.

Außerdem lässt sich erkennen, dass die Faserhauptrichtung V der Fasern 515 identisch mit der Längsrichtung der Symmetrieachse S, der Längsrichtung des strangförmigen Glieds 550 bzw. der Längsrichtung der Schubkörperkette 555 und der Bewegungsrichtung B ist. Eine solche Identität der Richtungen ist nicht zwingend nötig, jedoch wird es als vorteilhaft angesehen, wenn der Winkel zwischen der Faserhauptrichtung V und der Längsrichtung des strangförmigen Glieds 550 bzw. der Längsrichtung der Schubkörperkette 555 und der Bewegungsrichtung B zumindest kleiner als 10 Grad ist.

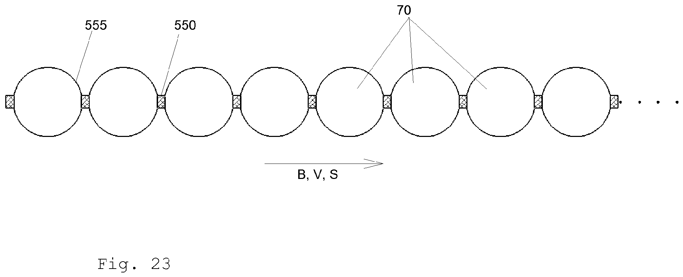

Die Figur 23 zeigt die Schubkörperkette 555 gemäß Figur 21 in einer Sicht von der Seite. Auch hier lässt sich erkennen, dass das strangförmige Glied 550 in dam faserhaltigen Material der Schubkörper eingebettet ist und sich durch eine Mehrzahl an Schubkörpern hindurcherstreckt.

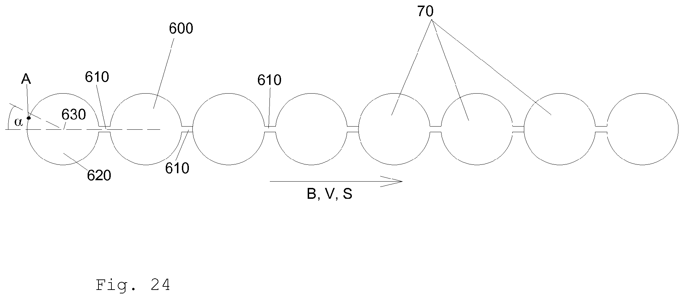

Die Figur 24 zeigt ein Ausführungsbeispiel für eine Schubkörperkette 600, bei der die Schubkörper 70 der Schubkörperkette miteinander durch Stege (Verbindungsstege) 610 verbunden sind. Die Stege 610 werden vorzugsweise bereits beim Spritzgießen der Schubkörper 70 gebildet, indem die Schubkörperkette 600 in einem Stück einschließlich der Stege 610 gespritzt oder gegossen wird. Der Anspritzpunkt A (oder die Anspritzpunkte) des die Fasern enthaltenden Spritzgussmaterials 620 liegen vorzugsweise zumindest auch am oder im Bereich des Endes der Schubkörperkette 600.

In der Figur 24 lässt sich ein bevorzugter Anspritzwinkel α für die Ein- oder Anspritzrichtung des Spritzgussmaterials 620 erkennen. Der Anspritzwinkel α liegt vorzugsweise zwischen 0 Grad und 30 Grad bezogen auf die Längsachse der Schubkörperkette 600 bzw. bezogen auf die spätere Bewegungsrichtung der Schubkörper 70. Der in der Figur 24 eingezeichnete Winkel bezieht sich beispielhaft auf den Mittelpunkt 630 des Schubkörpers 70, an dem das Anspritzen erfolgt. Vorzugsweise wird am oder im Bereich des Kettenendes der Schubkörperkette 600 angespritzt; dies hat den Vorteil, dass das Spritzgussmaterial durch die Stegbereiche der Spritzgussform hindurchgepresst wird, wodurch sich in besonders vorteilhafter Weise eine Ausrichtung der Längsrichtung der Fasern des Spritzgussmaterials in Kettenlängsrichtung und somit entlang der späteren Bewegungsrichtung der Schubkörper ergibt.

Die Stege 610 zwischen den Schubkörpern 70 können (durch eine entsprechende Materialwahl) elastisch sein, um ein Biegen der Schubkörperkette 600 in Krümmungsbereichen des Zuführungsrohres zu ermöglichen. Alternativ können die Stege 610 auch starr oder derart steif sein, dass sie ein Biegen der Schubkörperkette 600 verhindern; in diesem Falle werden die Stege 610 brechen, wenn sie bei der Montage des Gurtaufrollers in Krümmungsbereiche des Zuführungsrohres mit Druck eingeführt werden oder beim späteren Straffvorgang durch das Zuführungsrohr gepresst werden.

Um ein Gießen bzw. Spritzgießen der Schubkette sowie ein späteres Brechen der Stege zu ermöglichen, wird ein Stegdurchmesser zwischen 0,1mm und 10mm als vorteilhaft angesehen. Der maximale Stegdurchmesser ergibt sich aus der Forderung, dass die Stege beim Passieren von Krümmungen im Zuführungsrohr brechen können; der minimale Stegdurchmesser ist abhängig von der Viskosität des zu gießenden oder zu spritzenden Schubkörpermaterials. Die Viskosität des Schubkörpermaterials wird von dem Grundmaterial, also beispielsweise der Art des Kunststoffs, und der Konzentration der Fasern bestimmt: Je größer die Faserkonzentration ist, desto dickflüssiger wird das zu gießende oder zu spritzende Schubkörpermaterial bzw. desto größer wird dessen Viskosität und desto größer sollte der Stegdurchmesser mit Blick auf das Guss- bzw. Spritzgussverfahren gewählt werden, um zu erreichen, dass das Schubkörpermaterial beim Gießen bzw. Spritzen die Stegbereiche in der Gussform passieren kann. Ist das Schubkörpermaterial zu dickflüssig und der Stegbereich zu klein, so wird das Gießen/Spritzgießen erschwert oder gar unmöglich. Bei vielen Materialien, insbesondere bei Kunststoffen wie Polymiden und/oder einer Faserkonzentration zwischen 40% und 70% (als bevorzugt werden 60% ± 5% angesehen), ist ein Stegdurchmesser im Bereich zwischen 1mm und 3mm besonders vorteilhaft: Ein solcher Durchmesser ermöglicht das Gießen/Spritzgießen, und die Stege sind dennoch ausreichend dünn, um beim Passieren von Krümmungen im Zuführungsrohr brechen zu können.

Das Einführen der Schubkörperkette 600 in das Zuführungsrohr kann beispielsweise durch ein Füllrohr erfolgen, das auf das Zuführungsrohr aufgesetzt wird und ein Einführen der Schubkörperkette 600 unter einem ausreichend großen Druck ermöglicht, so dass es ggf. zu einem Brechen der Stege 610 kommen kann.

### Bezugszeichen

- 10: Gurtaufroller
- 20: Gurtspindel
- 30: Strafferantrieb
- 35: Massenträgheitskupplung
- 40: Gasgenerator
- 50: Antriebsrad
- 51: Haltekappe
- 52: Halteplatte
- 60: Zuführungsrohr
- 70: Schubkörper
- 100: Aufnahmeschalen
- 110: Aufnahmebehälter
- 120: Rohrwandabschnitt
- 121: Abschnittsende
- 122: T-förmiges Befestigungselement
- 130: Überdruckloch
- 140: Steuerungsloch
- 150: Abschnitt
- 160: Abschnitt
- 170: U-förmiger Träger
- 200: Kupplungsscheibe
- 201: Innenring
- 202: Außenring
- 203: federnde Verbindungselemente
- 210: Kupplungsklaue
- 220: Kupplungsklaue
- 230: Kupplungsklaue
- 240: Führungsscheibe
- 241: Deckplatte
- 242: Rastelement
- 243: Rastelement
- 245: Anschläge
- 246: weitere Anschläge
- 250: Kontaktfläche
- 260: Innenwand
- 300: Federelement
- 400: Schubkörperpaar
- 410: Verbindungsbereich
- 500: Steckabschnitt
- 505: Ausnehmung
- 510: lose Schubkörperkette
- 515: Faser
- 530: Zweiergruppe
- 535: Dreiergruppe
- 550: strangförmiges Glied
- 555: mechanisch flexible Schubkörperkette
- 600: Schubkörperkette
- 610: Steg
- 620: Spritzgussmaterial
- 630: Mittelpunkt
- A: Anspritzpunkt
- α: Anspritzwinkel
- B: Bewegungsrichtung
- *F̅k*: Kraftvektor
- *F̅f*: Kraftvektor
- M: Drehmoment
- P: Straffdrehrichtung
- V: Faserhauptrichtung
- S: Symmetrieachse

## Patentansprüche

1. Gurtaufroller (10) für einen Sicherheitsgurt mit einer Gurtspindel (20) zum Auf- und Abwickeln des Sicherheitsgurts und einem Strafferantrieb (30), der umfasst:
- einen Gasgenerator (40),
- ein Antriebsrad (50) und
- ein Zuführungsrohr (60), das den Gasgenerator und das Antriebsrad verbindet,
- wobei in dem Zuführungsrohr (60) mehrere Schubkörper (70) vorhanden sind, die nach einem Auslösen des Gasgenerators beschleunigt werden und das Antriebsrad zum Aufwickeln des Sicherheitsgurtes mittelbar oder unmittelbar antreiben,
**dadurch gekennzeichnet, dass**
zumindest zwei der Schubkörper faserverstärkte Schubkörper sind,
die zumindest zwei Schubkörper durch ein biegsames strangförmiges Glied (550), insbesondere ein Seil oder einen Draht, miteinander verbunden sind, und
das strangförmige Glied (550) in dem faserverstärkten Material der zumindest zwei Schubkörper eingebettet, insbesondere mit dem faserverstärkten Material der zumindest zwei Schubkörper vergossen ist.

2. Gurtaufroller nach Anspruch 1,
**dadurch gekennzeichnet, dass**
die Fasern (515) im faserverstärkten Schubkörper (70) eine Vorzugsorientierung aufweisen.

3. Gurtaufroller nach einem der voranstehenden Ansprüche, **dadurch gekennzeichnet, dass**
der faserverstärkte Schubkörper derart im Zuführungsrohr geführt wird, dass dessen Ausrichtung während der Bewegung durch das Zuführungsrohr (60) - bezogen auf die jeweilige Bewegungsrichtung - gleich bleibt.

4. Gurtaufroller nach einem der voranstehenden Ansprüche,
**dadurch gekennzeichnet, dass**
- zumindest die Hälfte der Fasern (515) des faserverstärkten Schubkörpers einen Winkel von weniger als 45 Grad zu einer mittleren Faserhauptrichtung (V) aufweist und
- die mittlere Faserhauptrichtung (V) die Vorzugsorientierung der Fasern im faserverstärkten Schubkörper bildet.

5. Gurtaufroller nach einem der voranstehenden Ansprüche,
**dadurch gekennzeichnet, dass**
der faserverstärkte Schubkörper derart im Zuführungsrohr geführt wird, dass der Winkel zwischen der Faserhauptrichtung und der jeweiligen Bewegungsrichtung (B) stets kleiner als 45 Grad ist.

6. Gurtaufroller nach einem der voranstehenden Ansprüche,
**dadurch gekennzeichnet, dass**
der faserverstärkte Schubkörper eine Symmetrieachse (S) aufweist und der Winkel zwischen der Symmetrieachse (S) und der Faserhauptrichtung (V) kleiner als 10 Grad ist.

7. Gurtaufroller nach einem der voranstehenden Ansprüche,
**dadurch gekennzeichnet, dass**
der faserverstärkte Schubkörper derart im Zuführungsrohr (60) geführt wird, dass der Winkel zwischen der Symmetrieachse (S) und der jeweiligen Bewegungsrichtung (B) während der Bewegung durch das Zuführungsrohr kleiner als 45 Grad ist.

8. Gurtaufroller nach einem der voranstehenden Ansprüche,
**dadurch gekennzeichnet, dass**
zumindest zwei im Zuführungsrohr aufeinander folgende Schubkörper abschnittweise ineinander gesteckt sind.

9. Gurtaufroller nach einem der voranstehenden Ansprüche,
**dadurch gekennzeichnet, dass**
zumindest ein im Zuführungsrohr befindlicher Schubkörper mindestens einen Steckabschnitt (500) aufweist, der in eine Ausnehmung (505) eines im Zuführungsrohr (60) benachbarten Schubkörpers eingesteckt ist.

10. Gurtaufroller nach einem der voranstehenden Ansprüche,
**dadurch gekennzeichnet, dass**
zumindest zwei der Schubkörper unter Bildung einer Schubkörperkette oder eines Schubkörperpaares miteinander verbunden sind.

11. Gurtaufroller nach einem der voranstehenden Ansprüche,
**dadurch gekennzeichnet, dass**
zumindest einer der Schubkörper faserverstärkten, beispielsweise glasfaserverstärkten, Kunststoff aufweist oder aus faserverstärktem, beispielsweise glasfaserverstärktem, Kunststoff besteht.

12. Gurtaufroller nach einem der voranstehenden Ansprüche,
**dadurch gekennzeichnet, dass**
der faserverstärkte Kunststoff zumindest einen der folgenden Kunststoffe enthält: ein Polyamid, ein wärmestabilisiertes, teilkristallines Polyamid und/oder Polyphthalamid.

13. Verfahren zum Herstellen eines Gurtaufrollers nach einem der voranstehenden Ansprüche,
**dadurch gekennzeichnet, dass**
faserverstärkte Schubkörper (70) oder eine Schubkörperkette (555, 600) aus faserverstärkten Schubkörpern durch Gießen oder Spritzgießen gebildet werden.

## Claims

1. Seat belt retractor (10) for a safety belt comprising a seat belt spindle (20) for winding up and unwinding the safety belt and a tensioning drive (30), which comprises:
- a gas generator (40),
- a drive wheel (50) and
- a supply pipe (60) which connects the gas generator and the drive wheel,
- a plurality of thrust elements (70) being present in the supply pipe (60) which, after triggering the gas generator, are accelerated and indirectly or directly drive the drive wheel for winding up the safety belt,
**characterized in that**
at least two of the thrust elements are fiber-reinforced thrust elements,
the at least two thrust elements are connected to one another by a flexible, strand-shaped link (550), in particular a cable or a wire, and the strand-shaped link (550) is embedded in the fiber-reinforced material of the at least two thrust elements, in particular cast with the fiber-reinforced material of the at least two thrust elements.

2. Seat belt retractor according to Claim 1, **characterized in that** the fibers (515) in the fiber-reinforced thrust element (70) have a preferred orientation.

3. Seat belt retractor according to either of the preceding claims,
**characterized in that** the fiber-reinforced thrust element is guided in the supply pipe in such a manner that the alignment of said thrust element remains the same - with respect to the particular direction of movement - during the movement through the supply pipe (60) .

4. Seat belt retractor according to one of the preceding claims,
**characterized in that**
- at least half of the fibers (515) of the fiber-reinforced thrust element are at an angle of less than 45 degrees to a mean main fiber direction (V), and
- the mean main fiber direction (V) forms the preferred orientation of the fibers in the fiber-reinforced thrust element.

5. Seat belt retractor according to one of the preceding claims,
**characterized in that** the fiber-reinforced thrust element is guided in the supply pipe in such a manner that the angle between the main fiber direction and the particular direction of movement (B) is always smaller than 45 degrees.

6. Seat belt retractor according to one of the preceding claims,
**characterized in that** the fiber-reinforced thrust element has an axis of symmetry (S), and the angle between the axis of symmetry (S) and the main fiber direction (V) is smaller than 10 degrees.

7. Seat belt retractor according to one of the preceding claims,
**characterized in that** the fiber-reinforced thrust element is guided in the supply pipe (60) in such a manner that the angle between the axis of symmetry (S) and the particular direction of movement (B) during the movement through the supply pipe is smaller than 45 degrees.

8. Seat belt retractor according to one of the preceding claims,
**characterized in that** at least two consecutive thrust elements in the supply pipe are partially plugged one into the other.

9. Seat belt retractor according to one of the preceding claims,
**characterized in that** at least one thrust element in the supply pipe has at least one plug-in section (500) which is plugged into a recess (505) in an adjacent thrust element in the supply pipe (60).

10. Seat belt retractor according to one of the preceding claims,
**characterized in that** at least two of the thrust elements are connected to one another forming a thrust element chain or a pair of thrust elements.

11. Seat belt retractor according to one of the preceding claims,
**characterized in that** at least one of the thrust elements contains fiber-reinforced, for example glass-fiber-reinforced, plastic or consists of fiber-reinforced, for example glass-fiber-reinforced, plastic.

12. Seat belt retractor according to one of the preceding claims,
**characterized in that** the fiber-reinforced plastic contains at least one of the following plastics: a polyamide, a heat-stabilized, partially crystalline polyamide and/or polyphthalamide.

13. Method for producing a seat belt retractor according to one of the preceding claims,
**characterized in that** fiber-reinforced thrust elements (70) or a thrust element chain (555, 600) consisting of fiber-reinforced thrust elements are/is formed by casting or injection molding.

## Revendications

1. Enrouleur de ceinture (10) pour une ceinture de sécurité, comprenant une broche à ceinture (20) destinée à enrouler et à dérouler la ceinture de sécurité et un mécanisme d'entraînement en tension (30), qui comprend :
- un générateur de gaz (40),
- une roue d'entraînement (50) et
- un tube d'arrivée (60) qui relie le générateur de gaz et la roue d'entraînement,
- plusieurs corps de poussée (70) étant présents dans le tube d'arrivée (60), lesquels sont accélérés après un déclenchement du générateur de gaz et entraînent directement ou indirectement la roue d'entraînement pour enrouler la ceinture de sécurité,
**caractérisé en ce que**
au moins deux des corps de poussée sont des corps de poussée renforcés par des fibres,
les au moins deux corps de poussée sont reliés l'un à l'autre par un élément (550) flexible en forme de tige, notamment une corde ou un fil métallique, et
l'élément (550) en forme de tige est enrobé dans le matériau renforcé par des fibres des au moins deux corps de poussée, notamment moulé avec le matériau renforcé par des fibres des au moins deux corps de poussée.

2. Enrouleur de ceinture selon la revendication 1, **caractérisé en ce que** les fibres (515) dans les corps de poussée (70) renforcés par des fibres présentent une orientation préférentielle.

3. Enrouleur de ceinture selon l'une des revendications précédentes, **caractérisé en ce que** les corps de poussée renforcés par des fibres sont guidés dans le tube d'arrivée de telle sorte que leur orientation, en référence au sens de déplacement respectif, reste identique pendant le mouvement à travers le tube d'arrivée (60).

4. Enrouleur de ceinture selon l'une des revendications précédentes, **caractérisé en ce que**
- au moins la moitié des fibres (515) du corps de poussée renforcé par des fibres présentent un angle inférieur à 45 degrés par rapport à une direction principale de fibres moyenne (V) et
- la direction principale de fibres moyenne (V) forme l'orientation préférentielle des fibres dans le corps de poussée renforcé par des fibres.

5. Enrouleur de ceinture selon l'une des revendications précédentes, **caractérisé en ce que** le corps de poussée renforcé par des fibres est guidé dans le tube d'arrivée de telle sorte que l'angle entre la direction principale des fibres et le sens de déplacement (B) respectif est toujours inférieur à 45 degrés.

6. Enrouleur de ceinture selon l'une des revendications précédentes, **caractérisé en ce que** le corps de poussée renforcé par des fibres possède un axe de symétrie (S) et l'angle entre l'axe de symétrie (S) et la direction principale de fibres (V) est inférieur à 10 degrés.

7. Enrouleur de ceinture selon l'une des revendications précédentes, **caractérisé en ce que** le corps de poussée renforcé par des fibres est guidé dans le tube d'arrivée (60) de telle sorte que l'angle entre l'axe de symétrie (S) et le sens de déplacement (B) respectif pendant le déplacement à travers le tube d'arrivée est inférieur à 45 degrés.

8. Enrouleur de ceinture selon l'une des revendications précédentes, **caractérisé en ce qu'**au moins deux corps de poussée successifs dans le tube d'arrivée sont insérés l'un dans l'autre par portion.

9. Enrouleur de ceinture selon l'une des revendications précédentes, **caractérisé en ce qu'**au moins l'un des corps de poussée renforcés qui se trouve dans le tube d'arrivée possède au moins une portion d'enfichage (500) qui est insérée dans une cavité (505) d'un corps de poussée voisin dans le tube d'arrivée (60) .

10. Enrouleur de ceinture selon l'une des revendications précédentes, **caractérisé en ce qu'**au moins deux des corps de poussée sont reliés ensemble en formant une chaîne de corps de poussée ou une paire de corps de poussée.

11. Enrouleur de ceinture selon l'une des revendications précédentes, **caractérisé en ce qu'**au moins l'un des corps de poussée possède une matière plastique renforcée par des fibres, par exemple renforcée par des fibres de verre, ou se compose de matière plastique renforcée par des fibres, par exemple renforcée par des fibres de verre.

12. Enrouleur de ceinture selon l'une des revendications précédentes, **caractérisé en ce que** la matière plastique renforcée par des fibres contient au moins l'une des matières plastiques suivantes : un polyamide, un polyamide semi-cristallin stabilisé thermiquement et/ou du polyphthalamide.

13. Procédé de fabrication d'un enrouleur de ceinture selon l'une des revendications précédentes, **caractérisé en ce que** les corps de poussée (70) renforcés par des fibres ou une chaîne de corps de poussée (555, 600) de corps de poussée renforcés par des fibres sont formés par moulage ou par moulage par injection.
